# EUROPÄISCHE PATENTSCHRIFT

(11) **EP 3 873 052 B1**
(45) Veröffentlichungstag und Bekanntmachung des Hinweises auf die Patenterteilung: **03.08.2022**
(21) Anmeldenummer: 20160186.1
(22) Anmeldetag: 28.02.2020
(51) Int. Cl.: H04L 9/40, H04W 12/06, H04W 12/08

(54) **ONBOARDING EINES GERÄTS IN EINEM MANDANTENFÄHIGEN VIRTUELLEN NETZ EINES INDUSTRIENETZWERKS**
ONBOARDING OF A DEVICE IN A CLIENT-CAPABLE VIRTUAL NETWORK OF AN INDUSTRIAL NETWORK
INTÉGRATION D'UN APPAREIL DANS UN RÉSEAU VIRTUEL MULTITENANT D'UN RÉSEAU INDUSTRIEL

(43) Veröffentlichungstag der Anmeldung: 01.09.2021
(73) Patentinhaber: Siemens Aktiengesellschaft, 80333 München (DE)
(72) Erfinder: Frank, Reinhard, 81369 München (DE); Zeiger, Florian, 85635 Höhenkirchen-Siegertsbrunn (DE)

(56) Entgegenhaltungen:
- EP-A1- 2 958 291
- US-A1- 2017 359 332
- US-A1- 2019 058 586

## Beschreibung

### Technisches Gebiet

Die Erfindung betrifft ein Verfahren zum Onboarding eines Geräts in einem mandantenfähigen virtuellen Netz eines Industrienetzwerks. Des Weiteren betrifft die Erfindung ein Industrienetzwerk, das dafür eingerichtet ist, ein effizientes On-boarding von Geräten in einem mandantenfähigen virtuellen Netz des Industrienetzwerks zu ermöglichen.

### Stand der Technik

In der vorliegenden Erfindung geht es darum, ein Verfahren zu entwickeln, wie neuen Geräten unabhängig von dem Gerätetyp oder der Art des Netzwerks Zugang zu einem bestehenden mandantenfähigen virtuellen Netz (englisch: virtual tenant network, VTN) gewährt werden kann. Herkömmlicherweise müssen Geräte speziell konfiguriert sein, um, bei entsprechender Berechtigung, Zugang zu einem bestimmten mandantenfähigen virtuellen Netz erlangen zu können. Das entsprechend vorkonfigurierte Gerät stellt eine Onboarding-Anfrage für das gewünschte virtuelle Netz, seine Zugangsberechtigung wird geprüft und es erhält, bei positiver Überprüfung, Zugang zu dem virtuellen Netz.

Ein Nachteil hiervon ist, dass das Gerät bereits bei seiner Auslieferung gewisse Voreinstellungen aufweisen muss. Das Gerät, insbesondere seine Kommunikationsschnittstelle, müssen also zu einem Zeitpunkt konfiguriert werden, zu dem in vielen Anwendungsfällen noch unklar sein dürfte, ob bzw. zu welchen virtuellen Netzen das betreffende Gerät einmal zukünftig Zugriff haben soll.

Ferner existiert ein standardisierter Mechanismus, neuen Geräten Zugang zu einem bestehenden mandantenfähigen virtuellen Netz zu gewähren, bislang noch nicht. Bisher bietet jeder Anbieter sein eigenes Verfahren an, neue Geräte in mandantenfähigen virtuellen Netzen zu integrieren.

Gesucht sind also ein Verfahren und ein Industrienetzwerk, die flexibel gegenüber den zu integrierenden Geräten und den bestehenden mandantenfähigen virtuellen Netzen sind, und die möglichst wenige spezifische Voreinstellungen an den Geräten erfordern.

US2019058586 offenbart ein on-boarding Verfahren basiert auf einem Sprachbefehl. EP2958291 offenbart ein on-boarding Verfahren basiert auf einem challenge-response Verfahren. US2017359332 offenbart ein on-boarding Verfahren mit Verwendung von vorverteilten Schlüsseln.

### Allgemeine Beschreibung der Erfindung

Diese Aufgabe wird durch das Verfahren und das Industrienetzwerk gemäß der unabhängigen Ansprüche gelöst. Vorteilhafte Weiterführungen und Ausbildungsformen sind in den abhängigen Ansprüchen, der Beschreibung und den Abbildungen offenbart. Demgemäß wird ein Verfahren zum Onboarding eines Geräts in einem mandantenfähigen virtuellen Netz eines Industrienetzwerks bereitgestellt, das die folgenden Schritte umfasst:
- Empfangen einer Onboarding-Anfrage des Geräts betreffs eines Zugangs zu dem mandantenfähigen virtuellen Netz des Industrienetzwerks, wobei die Onboarding-Anfrage in einem Zugangsnetz des Industrienetzwerks, das einem Onboarding-Netz des Industrienetzwerks zugeordnet ist, empfangen wird,
- Identifizieren und Überprüfen des Geräts mittels eines Authentifizierungsmoduls des Industrienetzwerks,
- bei einem positiven Ergebnis der Überprüfung, Senden einer Konfigurationsdatei an das Gerät, wobei in der Konfigurationsdatei Daten bezüglich der Zugangsberechtigung des Geräts zu dem mandantenfähigen virtuellen Netz enthalten sind,
- Konfigurieren des Geräts, insbesondere einer Kommunikationsschnittstelle des Geräts, gemäß der von dem Gerät empfangenen Konfigurationsdatei,
- Überprüfen der Zugangsberechtigung des konfigurierten Geräts in einem Zugangspunkt des Industrienetzwerks und
- bei einem positiven Ergebnis der Überprüfung, Gewähren eines Zugangs des Geräts zu dem mandantenfähigen virtuellen Netz.

Ein wichtiger Aspekt der Erfindung besteht darin, dass das Gerät, das die Onboarding-Anfrage stellt, keine speziellen Voreinstellungen benötigt, um den Onboarding-Prozess durchzuführen. In anderen Worten muss das Gerät nicht speziell konfiguriert sein, um, bei entsprechender Berechtigung, Zugang zu dem betreffenden mandantenfähigen virtuellen Netz zu erlangen. Das Gerät meldet sich zunächst in einem Zugangsnetz des Industrienetzwerks an, das einem eigens für das Onboarding neuer Geräte vorgesehenen Onboarding-Netz zugeordnet ist. Anschließend wird die Identität des anfragenden Geräts festgestellt und, beispielsweise mithilfe einer Datenbank, überprüft, ob das Gerät prinzipiell befugt ist, zu dem nachgesuchten mandantenfähigen virtuellen Netz Zugriff zu erhalten. Bei positiver Überprüfung erhält das Gerät ein sogenanntes Konfigurationspaket, mithilfe dessen das Gerät sich entsprechend konfiguriert. Das konfigurierte Gerät kann sich anschließend über einen Zugangspunkt direkt beim mandantenfähigen virtuellen Netz anmelden. Am Zugangspunkt wird, wie im Stand der Technik, die Zugangsberechtigung überprüft und bei positivem Ergebnis der Überprüfung, dem Gerät der Zugang zu dem virtuellen Netz gewährt.

Unter dem "Onboarding" wird im Rahmen dieser Patentanmeldung der Prozess verstanden, bei dem ein Gerät, insbesondere ein neues Gerät, Zugriff auf ein Netz/Netzwerk oder einen Teil davon erhält. Das Onboarding kann pro Gerät einmalig erfolgen, nämlich dann, wenn das Gerät erstmalig Zugriff auf das Netz begehrt. Es kann aber auch festgelegt sein, dass ein zugreifendes Gerät in regelmäßigen oder unregelmäßigen Abständen immer wieder den Onboarding-Prozess durchlaufen muss. Dies kann der Sicherheit der Benutzer, Geräte, Daten sowie des gesamten Netzes dienen. Dies kann z.B. aber auch einer Änderung im Zugangspunkt bzw. im virtuellen Netz geschuldet sein, die ein neues Onboarding inklusive einer neu verschickten Konfigurationsdatei an das Gerät nötig machen.

Unter einem "mandantenfähigen virtuellen Netz" wird ein Daten- und Kommunikationsnetzwerk verstanden, das exklusiv für einen spezifischen Mandaten zur Verfügung steht und verteilte Arbeitsbereiche des Mandanten miteinander verbinden kann. Dem mandantenfähigen virtuellen Netz können dazu definierte Ressourcen zugeteilt werden und das Netz/Netzwerk wird unter Zuhilfenahme von virtuellen Komponenten und Technologien realisiert. Im Rahmen dieser Patentanmeldung wird ein "mandantenfähiges virtuelles Netz" der besseren Lesbarkeit halber gelegentlich auch verkürzt "virtuelles Netz" genannt, bezeichnet aber dasselbe. Im Englischen bzw. in der Fachsprache wird ein mandantenfähiges virtuelles Netz auch als "virtual tenant network" (VTN) bezeichnet. Ein mandantenfähiges virtuelles Netz umfasst insbesondere ein "multi-tenant virtual network" bzw. "multi-user virtual network". Diese Bezeichnungen streichen heraus, dass mehrere Geräte auf das virtuelle Netz zugreifen können. Ein flexibles, aber zugleich sicheres Zuweisen von Zugangsberechtigungen zu dem virtuellen Netz für eine Vielzahl von Geräten ist offensichtlich von hohem Interesse.

Das "Industrienetzwerk" betrifft insbesondere jede Art industrieller Kommunikationsnetze. Beispiele hierfür sind ein Kommunikationsnetzwerk in einer Produktionshalle mit einer Vielzahl von miteinander vernetzten Anlagen (Geräten) oder ein Betreibernetzwerk eines Stromversorgungsnetzes, z.B. ein Windpark mit einer Vielzahl von Windkraftanlagen. Ein Industrienetzwerk weist insbesondere einen oder mehrere Industrienetzwerkknoten, englisch "industrial network nodes", auf. Ein Beispiel für einen Industrienetzwerkknoten ist ein spezifisches Gerät, beispielsweise ein Industrie-PC oder auch ein rugged Computer, auf dem das mandantenfähige virtuelle Netz eingerichtet ist. Alternativ kann ein mandantenfähiges virtuelles Netz sich auch auf mehrere Industrienetzwerkknoten, d.h. z.B. mehrere PC's erstrecken.

Unter einem "Zugangsnetz", englisch "access network", wird im Rahmen dieser Patentanmeldung ein Netz/Netzwerk verstanden, mittels dessen ein Gerät Zugang zu einen spezifischen mandantenfähigen virtuellen Netz erlangen kann. Es ist das Zugangsnetz, in dem Onboarding-Anfragen von Geräten zuerst angenommen, in anderen Worten empfangen, werden.

In einer ersten Alternative ist das Zugangsnetz für jegliche Geräte offen. Das heißt, dass ein Gerät keinerlei Voreinstellungen aufweisen oder Vorbedingungen erfüllen muss, um Zugriff auf das Zugangsnetz zu erlangen. Dies setzt die ursprüngliche Idee der Erfindung um: Unabhängig vom Gerätetyp und unabhängig davon, wie es konfiguriert ist, kann ein Gerät eine entsprechende Onboarding-Anfrage für ein spezifisches mandantenfähiges virtuelles Netz stellen. Für den Zugang zu dem entsprechenden virtuellen Netz bedarf es eine entsprechende Zugangsberechtigung, der Zugang zum Zugangsnetz ist jedoch offen für jegliche Geräte.

In einer zweiten Alternative ist der Zugang zum Zugangsnetz beschränkt. Der Zugang zum Zugangsnetz kann beispielsweise mit einem Passwort geschützt sein. Hierbei kann es sich z.B. um ein "Master-Passwort" handeln, dass nicht gerätespezifisch vergeben wird, sondern pauschal für das gesamte Industrienetzwerk gilt. Eine solche Ausführungsform kann beispielsweise von dem Betreiber einer Produktionshalle gewünscht sein, der sein Industrienetzwerk zwar im Prinzip für alle onboardende Geräte offen gestalten möchte, das Zugangsnetz aber auch nicht komplett offen und ungeschützt lassen will. Somit kann er ein pauschales, d.h. geräteunspezifisches Passwort für das Zugangsnetz vergeben. Sobald ein Gerät bzw. dessen Nutzer dieses Passwort kennt, kann das Gerät auf das Zugangsnetz zugreifen und seine Onboarding-Anfrage kann empfangen und verarbeitet werden.

Das Zugangsnetz kann permanent zum Empfangen von Onboarding-Anfragen von Geräten zur Verfügung gestellt werden. Es kann aber auch gewünscht sein, dass das Zugangsnetz nur zeitlich begrenzt zum Empfangen von Onboarding-Anfragen zur Verfügung gestellt wird. Dies hat den Effekt, dass absolut sichergestellt ist, dass in den Zeiten, in denen das Zugangsnetz nicht zur Verfügung gestellt wird - in denen es also nicht zugänglich ist - kein Onboarding stattfinden kann. Der Vorteil ist eine erhöhte Sicherheit für den Zugriff von Geräten auf das mandantenfähige virtuelle Netz. Beispielsweise kann ein Zugangsnetz immer nur wochentags von 6 Uhr bis 20 Uhr zur Verfügung gestellt werden. Oder es kann an sich nur für eine begrenzte Zeit, z.B. für 12 Stunden ab Erstellungszeitpunkt, zur Verfügung stehen. Alle infrage kommenden Geräte müssten dann in diesem Zeitraum onboarden. Anschließend wird dieses Zugangsnetz geschlossen und bei Bedarf wird ein neues Zugangsnetz erzeugt.

Jedem Zugangsnetz ist mindestens ein Onboarding-Netz zugeordnet und vice versa. Das Onboarding-Netz, englisch "onboarding network", ist ein Teil des Industrienetzwerks und hat die Funktion, das Onboarding eines Geräts für ein bestimmtes mandantenfähiges virtuelles Netz zu unterstützen bzw. zu ermöglichen.

Das Onboarding-Netz selbst kann beispielsweise gemäß den folgenden Schritten bereitgestellt werden:
- Erzeugen des Onboarding-Netzes und eines Authentifizierungsmoduls,
- Verbinden des Onboarding-Netzes mit dem Authentifizierungsmodul,
- Erstrecken des Onboarding-Netzes auf einen Zugangspunkt des Industrienetzwerks,
- Erzeugen eines Zugangsnetzes und
- Verbinden des Zugangsnetzes mit dem Onboarding-Netz.

Das Authentifizierungsmodul ist vorteilhafterweise mit einer Datenbank verbindbar. In dieser Datenbank sind Informationen enthalten, anhand derer die Identität eines Geräts, das eine Onboarding-Anfrage gestellt hat, festgestellt und überprüft werden kann. Das Authentifizierungsmodul kann insbesondere mithilfe der Datenbank ermitteln, ob, und falls ja, in welchem Umfang, dem die Onboarding-Anfrage stellenden Gerät Zugang zu dem virtuellen Netz gewährt werden soll.

Unter einem Zugangspunkt, englisch "Access Point", wird insbesondere eine Schnittstelle zwischen dem Industrienetzwerk und dem onboardenden Gerät verstanden. Der Zugangspunkt kann eine Hardware in Form eines elektronischen Geräts sein, der zum Beispiel selbst über ein Kabel mit einem fest installierten Kommunikationsnetz verbunden ist und als Schnittstelle für kabellose Kommunikationsendgeräte fungiert, die per Drahtlosadapter eine drahtlose Verbindung zu dem Zugangspunkt herstellen können. Es sind jedoch auch rein virtuelle Zugangspunkte denkbar, die rein softwareseitig realisiert sind und dennoch als Schnittstelle zwischen den onboardenden Geräten und einem Industrienetzwerk fungieren.

Die vorliegende Erfindung bezieht sich nicht nur auf das bisher beschriebene Verfahren zum Onboarding eines Geräts in einem mandantenfähigen virtuellen Netz eines Industrienetzwerks, sondern auch darauf, wie ein solches Industrienetzwerks vorteilhafterweise ausgestaltet ist.

Erfindungsgemäß umfasst ein solches Industrienetzwerk zumindest ein mandantenfähiges virtuelles Netz, ein Onboarding-Netz, ein dem Onboarding-Netz zugeordnetes Zugangsnetz, ein Authentifizierungsmodul und einen Zugangspunkt. Das Zugangsnetz ist hierbei so eingerichtet, dass es eine Onboarding-Anfrage eines Geräts betreffs eines Zugangs zu dem mandantenfähigen virtuellen Netz empfangen kann. Das Authentifizierungsmodul ist dazu eingerichtet, das Gerät zu identifizieren und zu überprüfen. Das Onboarding-Netz erstreckt sich auf den Zugangspunkt. Der Zugangspunkt ist dazu eingerichtet, eine Zugangsberechtigung des Geräts zu überprüfen und, bei einem positiven Ergebnis der Überprüfung, dem Gerät Zugang zu dem mandantenfähigen virtuellen Netz zu gewähren.

Definitionen, Funktionen und Ausgestaltungsformen der einzelnen Elemente des Industrienetzwerks wurden bereits im Zusammenhang mit dem Verfahren zum Onboarding eines Geräts in einem mandantenfähigen virtuellen Netz eines Industrienetzwerks beschrieben. Sie werden aus Gründen der gebotenen Knappheit und Übersichtlichkeit im Zusammenhang mit dem erfindungsgemäßen Industrienetzwerks nicht wiederholt, gelten aber entsprechend.

Das Industrienetzwerk kann, und wird in der Praxis in aller Regel, nicht nur eins, sondern mehrere mandantenfähige virtuelle Netze aufweisen. Das Industrienetzwerk weist also ein mandantenfähiges virtuelles Netz und mindestens ein weiteres mandantenfähiges virtuelles Netz auf.

In einer Ausführungsform der Erfindung fungiert das Onboarding-Netz als gemeinsames Onboarding-Netz für das Onboarding von Geräten für beide virtuellen Netze - also sowohl, wenn diese auf das mandantenfähige virtuelle Netz als auch, wenn diese auf das weitere mandantenfähige virtuelle Netz Zugang begehren. Diese Ausführungsform kann im englisch-sprachlichen Fachjargon auch als "as central service" bezeichnet werden.

Der Vorteil ist, dass nur ein Onboarding-Netz erzeugt und zur Verfügung gestellt werden muss. Ebenso muss auch nur ein Zugangsnetz, welches dem Onboarding-Netz zugeordnet ist, zur Verfügung gestellt werden (es können optional auch mehrere Zugangsnetze einem einzigen Onboarding-Netz zugeordnet sein; dies wird später noch ausführlicher erläutert werden). Das eine Onboarding-Netz kann mit einem einzigen Authentifizierungsmodul verbunden sein. Die Struktur ist also schlank und übersichtlich.

Ein Nachteil dieser Ausführungsform besteht jedoch darin, dass bei Ausfall des Onboarding-Netzwerks das Onboarding für alle diejenigen mandantenfähigen virtuellen Netze, für die das gemeinsame Onboarding-Netz als Onboarding-Netz fungiert, gestört, das heißt nicht funktionsfähig ist.

Deswegen kann das Industrienetzwerk in einer anderen Ausführungsform ein weiteres Onboarding-Netz aufweisen. In diesem Fall fungiert vorteilhafterweise das Onboarding-Netz für das Onboarding von Geräten zu dem mandantenfähigen virtuellen Netz und das weitere Onboarding-Netz für das Onboarding von Geräten zu dem weiteren mandantenfähigen virtuellen Netz. Ist nun beispielsweise das weitere Onboarding-Netz nicht verfügbar, ist das Onboarding von Geräten in das mandantenfähige virtuelle Netz davon unbeeinträchtigt und kann unabhängig von der Nichtverfügbarkeit des weiteren Onboarding-Netzes durchgeführt werden. Diese Ausführungsform kann im englisch-sprachlichen Fachjargon auch als "per tenant" bezeichnet werden.

Weist das Industrienetzwerk mehrere mandantenfähige virtuelle Netze auf, kann es ein gemeinsames Authentifizierungsmodul für alle mandantenfähigen virtuellen Netze oder ein individuelles Authentifizierungsmodul pro mandantenfähiges virtuelles Netz geben. Auch hier ist in der Praxis unter anderem zwischen einer schlanken Struktur des Netzwerks und einer Ausfallsicherheit betreffs des gesamten Netzwerks abzuwägen.

Weist das Industrienetzwerk mehrere Onboarding-Netze und mehrere Authentifizierungsmodule auf, können diese alle zum Beispiel in einer Einheit des Industrienetzwerks, z.B. in einem Industrienetzwerkknoten, lokalisiert sein. Alternativ können die Onboarding-Netze und/oder die Authentifizierungsmodule auch in mehreren Einheiten des Industrienetzwerks beherbergt, d.h. lokalisiert, sein. Die erste Variante kann im englisch-sprachlichen Fachjargon auch als "centralized deployment", die zweite Variante als "distributed deployment" bezeichnet werden.

Wie schon erwähnt, kann das Industrienetzwerk mehrere Zugangspunkte aufweisen, auf die sich das Onboarding-Netz erstreckt.

Eine Motivation, mehrere Zugangspunkte bereitzustellen, kann eine große physische Ausdehnung des Industrienetzwerks sein. Umfasst das Industrienetzwerk beispielsweise eine gesamte Produktionshalle mit mehreren Tausend Quadratmetern Grundfläche, ist es sinnvoll, die Produktionshalle mit mehreren Zugangspunkten für onboardende Geräte auszustatten.

Andererseits können auch mehrere Zugangspunkte am im Wesentlichen gleichen physischen Ort für unterschiedliche Zugangstechnologien bereitgestellt werden. So kann z.B. ein Zugangspunkt für drahtlose Kommunikation mit den Geräten vorgesehen sein und ein weiterer Zugangspunkt für die Kommunikation mit den Geräten über das Mobilfunknetz (z.B. 5G).

### Kurze Beschreibung der Zeichnungen

Nachfolgend wird die Erfindung anhand der beigefügten Abbildungen veranschaulicht. Diese sind rein schematisch und zeigen beispielhaft und ohne Beschränkung des beanspruchten Schutzumfangs verschiedene Ausführungsformen der Erfindung.

Die Abbildungen zeigen:
- Fig. 1:: eine erste Ausführungsform des erfindungsgemäßen Industrienetzwerks,
- Fig. 2:: eine zweite Ausführungsform des erfindungsgemäßen Industrienetzwerks,
- Fig. 3:: eine dritte Ausführungsform des erfindungsgemäßen Industrienetzwerks,
- Fig. 4:: eine vierte Ausführungsform des erfindungsgemäßen Industrienetzwerks und
- Fig. 5:: eine fünfte Ausführungsform des erfindungsgemäßen Industrienetzwerks.

### Detaillierte Beschreibung der Zeichnungen

Es sei vorangestellt, dass gleiche oder ähnliche Elemente in verschiedenen Abbildungen mit denselben Bezugszeichen gekennzeichnet sind. Zur Vermeidung von Wiederholungen werden Elemente mit denselben Bezugszeichen nicht für jede Abbildung gesondert genannt und erläutert. Hierfür seien auf die vorangehenden Abbildungen verwiesen.

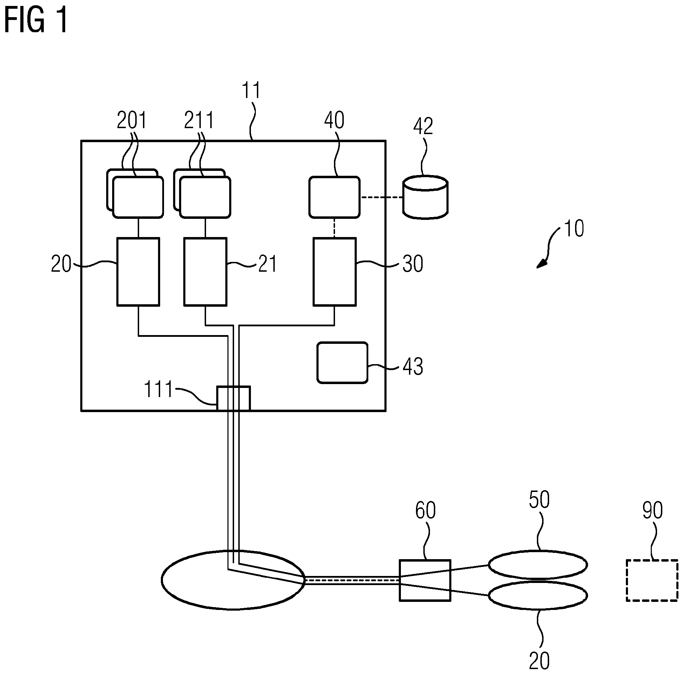

Die Abbildung 1 (auch als Fig. 1 bezeichnet) zeigt ein Industrienetzwerk 10 mit einem ersten Industrienetzwerkknoten 11. Das Industrienetzwerk 10 ist beispielsweise ein Kommunikationsnetzwerk in einer Produktionshalle; der erste Industrienetzwerkknoten 11 ist beispielsweise ein Industrie-PC in dem genannten Kommunikationsnetzwerk. Das Industrienetzwerk 10 weist noch eine Vielzahl weiterer Industrienetzwerkknoten auf, die jedoch der Übersicht halber in Fig. 1 nicht gezeigt sind.

Der erste Industrienetzwerkknoten 11 weist eine Schnittstelle 111 auf, die eine tatsächliche, d.h. physische Schnittstelle zu dem restlichen Industrienetzwerk 10 darstellt. Mittels der Schnittstelle 111 ist der erste Industrienetzwerkknoten 11 insbesondere mit einem Zugangspunkt 60 verbunden. Der Zugangspunkt 60 fungiert wiederum als Schnittstelle oder "Ankerpunkt" für Geräte 90, die Zugang zu dem Industrienetzwerk 10 bzw. Teilen davon begehren.

Das Industrienetzwerk 10 umfasst ein mandantenfähiges virtuelles Netz 20 und weiteres mandantenfähiges virtuelles Netz 21. Auf beiden mandantenfähigen virtuellen Netzen 20, 21 laufen jeweils Anwendungen 201 bzw. 211, englisch "applications" oder verkürzt "apps". Das mandantenfähige virtuelle Netz 20 erstreckt sich bis zu dem Zugangspunkt 60. Ein Gerät 90, das eine Onboarding-Anfrage gestellt hat, eine Konfigurationsdatei mit Daten bezüglich der Zugangsberechtigung des Geräts 90 zu dem mandantenfähigen virtuellen Netz 20 erhalten hat und gemäß der empfangenen Konfigurationsdatei konfiguriert ist, kann sich in der Folge an den Zugangspunkt 60 wenden und dort insbesondere an das sich bis dahin erstreckende mandantenfähige virtuelle Netz 20. Am Zugangspunkt 60 wird die Zugangsberechtigung des Geräts 90 für das virtuelle Netz 20 überprüft. Bei positivem Ergebnis der Überprüfung wird dem Gerät 90 Zugang auf das virtuelle Netz 20 gewährt.

Auch das weitere mandantenfähige virtuelle Netz 21 erstreckt sich bis zu einem Zugangspunkt. Dies kann derselbe Zugangspunkt 60 wie für das mandantenfähige virtuelle Netz 20 oder ein anderer Zugangspunkt sein. Der Übersichtlichkeit halber ist der Teil des weiteren mandantenfähigen virtuellen Netzes 21, der sich außerhalb des ersten Industrienetzwerkknotens 11 befindet, in Fig. 1 nicht gezeigt.

Der erste Industrienetzwerkknoten 11 weist ferner ein Onboarding-Netz 30. Dem Onboarding-Netz 30 ist ein Zugangsnetz 50 zugeordnet, das sich insbesondere am Zugangspunkt 60 befindet. Das Onboarding-Netz 30 ist verbunden (oder temporär verbindbar) mit einem Authentifizierungsmodul 40. Das Authentifizierungsmodul kann wiederum auf eine Datenbank 42 zugreifen, um die Identifikation und Überprüfung eines Geräts 90, das eine Onboarding-Anfrage stellt, durchführen zu können.

Schließlich weist das Industrienetzwerk 10 noch eine Verwaltungseinheit 43 auf, die dafür vorgesehen ist, Onboarding-Netze zu erzeugen. Die Onboarding-Netze können dauerhaft, auf Anforderung ("on demand") oder nach einem vorbestimmten Zeitplan erzeugt von der Verwaltungseinheit 43 erzeugt werden.

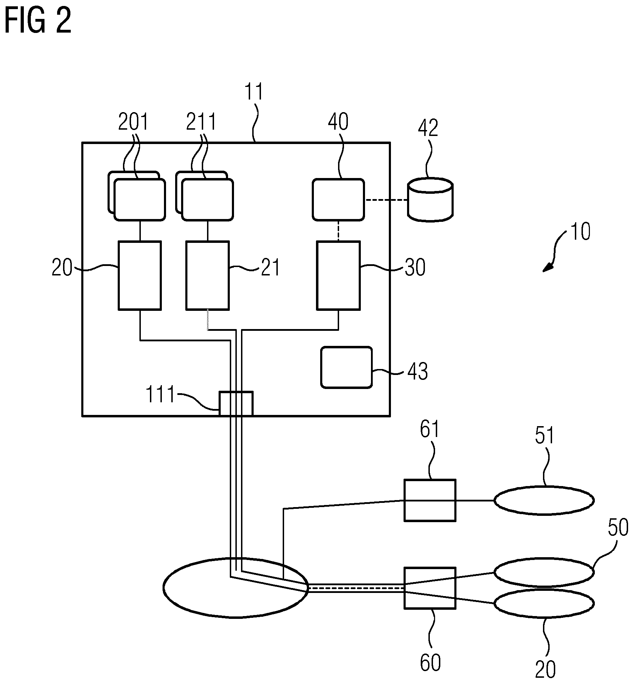

Die Abbildung 2 (auch als Fig. 2 bezeichnet) zeigt ein Industrienetzwerk 10 gemäß einer zweiten Ausführungsform der Erfindung. Im Unterschied zu der ersten Ausführungsform sind hier dem Onboarding-Netz 30 mehrere Zugangsnetze zugeordnet, das Zugangsnetz 50 und das weitere Zugangsnetz 51. Das Zugangsnetz 50 befindet sich am Zugangspunkt 60; das weitere Zugangsnetz 51 an einem weiteren Zugangspunkt 61. Für das Vorhandensein mehrerer Zugangspunkte 60, 61 und Zugangsnetze 50, 51 kann es unterschiedliche Gründe geben: Die Zugangspunkte 60, 61 können beispielsweise örtlich beträchtlich, insbesondere mehrere Meter, voneinander entfernt angeordnet sein. Alternativ können die verschiedenen Zugangspunkte 60, 61 auch verschiedene Zugangstechnologien (WLAN, 5G, kabelgebunden, ...) adressieren.

Das Charakteristische an der zweiten Ausführungsform ist, dass beide Zugangsnetze 50, 51 einem gemeinsamen Onboarding-Netz 30 zugeordnet sind und dass Onboarding-Anfragen, unabhängig davon, an welchem Zugangsnetz 50, 51 sie empfangen werden, von einem gemeinsamen Authentifizierungsmodul 40 geprüft werden. Ein solcher Aufbau kann auch als ein Onboarding-Mechanismus "as a central service" bezeichnet werden.

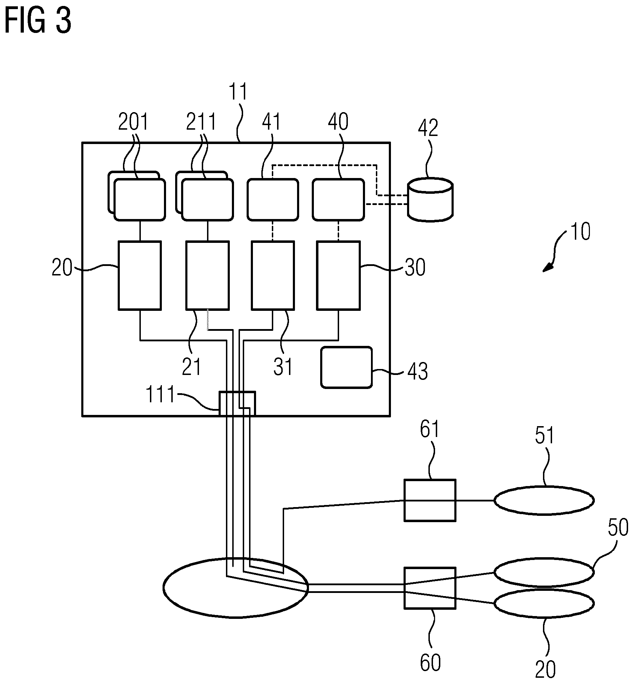

Die Abbildung 3 (auch als Fig. 3 bezeichnet) zeigt ein Industrienetzwerk 10 gemäß einer dritten Ausführungsform der Erfindung. Hier weist das Industrienetzwerk 10, präziser der erste Industrienetzwerkknoten 11, jeweils ein Onboarding-Netz pro mandantenfähiges virtuelles Netz auf: das Onboarding-Netz 30 für das mandantenfähige virtuelle Netz 20 und das weitere Onboarding-Netz 31 für das weitere mandantenfähige virtuelle Netz 21. Jedem Onboarding-Netz 30, 31 ist ein individuelles Zugangsnetz 50, 51 in einem individuellen Zugangspunkt 60, 61 zugeordnet. Auch ist jedes Onboarding-Netz 30, 31 mit einem individuellen Authentifizierungsmodul 40, 41 verbunden oder zumindest verbindbar. Ist ein Zugangsnetz (gewollt oder ungewollt) nicht verfügbar, berührt dies nicht das Onboarding eines Geräts 90 zu dem anderen Zugangsnetz/Onboarding-Netz und letztlich zu dem anderen virtuellen Netz. Ein solcher Aufbau kann auch als ein Onboarding-Mechanismus "per tenant network" bezeichnet werden.

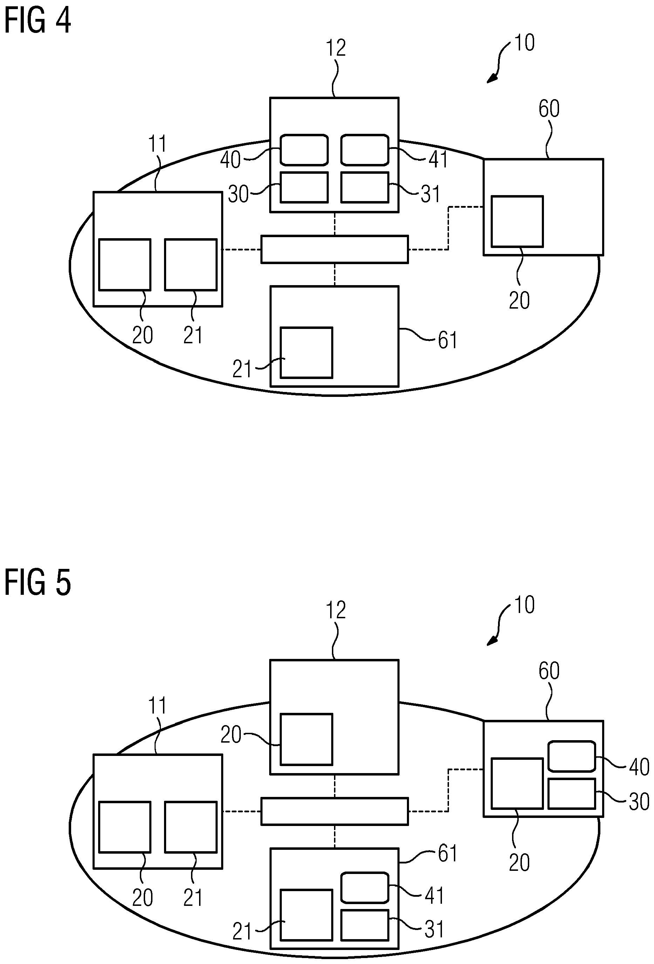

Die Abbildung 4 (auch als Fig. 4 bezeichnet) zeigt ein Industrienetzwerk 10 gemäß einer vierten Ausführungsform der Erfindung. Im Unterschied zu den bisherigen Ausführungsbeispielen sind hier zwei Industrienetzwerkknoten gezeigt: ein erster Industrienetzwerkknoten 11 und ein zweiter Industrienetzwerkknoten 12. Die beiden Industrienetzwerkknoten 11, 12 repräsentieren z.B. zwei verschieden Industrie-PC's in einem Kommunikationsnetzwerk. Das Industrienetzwerk 10 weist zwei mandantenfähige virtuelle Netze 20, 21 auf. Beide virtuellen Netze 20, 21 befinden sich auf einem Industrienetzwerkknoten, im dargestellten Beispiel auf dem ersten Industrienetzwercknoten 11. Das Industrienetzwerk 10 weist auch zwei Onboarding-Netze 30, 31 und zwei Authentifizierungsmodule 40, 41 auf. Die beiden Onboarding-Netze 30, 31 und die beiden Authentifizierungsmodule 40, 41 befinden sich alle auf dem zweiten Industrienetzwerkknoten 12. Somit beherbergt eine einzige Einheit, nämlich der zweite Industrienetzwerkknoten 12, sämtliche Onboarding-Netze 30, 31 und Authentifizierungsmodule 40, 41. Ein solcher Aufbau kann auch als "centralized deployment" bezeichnet werden.

Im Unterschied dazu zeigt das fünfte Ausführungsbeispiel einen Aufbau, der als "distributed deployment" bezeichnet werden kann. Hier befinden sich das Onboarding-Netz 30 und das Authentifizierungsmodul 40 für das mandantenfähige virtuelle Netz 20 auf einer ersten Einheit, nämlich dem (ersten) Zugangspunkt 60, und das weitere Onboarding-Netz 31 und das weitere Authentifizierungsmodul 41 für das weitere mandantenfähige virtuelle Netz 21 auf einer zweiten Einheit, nämlich dem weiteren Zugangspunkt 61.

Das in Abbildung 5 (auch als Fig. 5 bezeichnet) gezeigte fünfte Ausführungsbeispiel zeigt im Übrigen auch die Variante, dass ein mandantenfähiges virtuelles Netz sich auf mehrere Industrienetzwerkknoten erstrecken kann. So befindet sich das virtuelle Netz 30 sowohl auf dem ersten Industrienetzwerkknoten 11 als auch auf dem zweiten Industrienetzwerkknoten 12. Auch illustriert die Fig. 5, dass ein Onboarding-Netz nicht zwangsläufig auf einem Industrienetzwerkknoten lokalisiert sein muss. In Fig. 5 befinden sich das Onboarding-Netz 30, 31 und das Authentifizierungsmodul 40, 41 sowohl für das mandantenfähige virtuelle Netz 20 als auch für das weitere mandantenfähige virtuelle Netz 21 jeweils auf dem Zugangspunkt 50 bzw. weiteren Zugangspunkt 51.

Zusammenfassend lässt sich festhalten, dass sich das erfindungsgemäße Konzept des Onboardings von Geräten in einem mandantenfähigen virtuellen Netz eines Industrienetzwerks äußerst flexibel auf die konkrete Ausgestaltung des betreffenden Industrienetzwerks anwenden lässt.

### Bezugszeichenliste

- 10: Industrienetzwerk
- 11: Erster Industrienetzwerkknoten
- 111: Schnittstelle (des ersten Industrienetzwerkknotens)
- 12: Zweiter Industrienetzwerkknoten

- 20: Mandantenfähiges virtuelles Netz
- 201: Anwendung
- 21: Weiteres mandantenfähiges virtuelles Netz
- 211: Anwendung

- 30: Onboarding-Netz
- 31: Weiteres Onboarding-Netz

- 40: Authentifizierungsmodul
- 41: Weiteres Authentifizierungsmodul
- 42: Datenbank
- 43: Verwaltungseinheit

- 50: Zugangsnetz
- 51: Weiteres Zugangsnetz

- 60: Zugangspunkt
- 61: Weiterer Zugangspunkt

- 90: Gerät

## Patentansprüche

1. Verfahren zum Onboarding eines Geräts (90) in einem mandantenfähigen virtuellen Netz (20) eines Industrienetzwerks (10), umfassend die folgenden Schritte:
- Empfangen einer Onboarding-Anfrage des Geräts (90) betreffs eines Zugangs zu dem mandantenfähigen virtuellen Netz (20) des Industrienetzwerks (10), wobei die Onboarding-Anfrage in einem Zugangsnetz (50) des Industrienetzwerks (10), das einem Onboarding-Netz (30) des Industrienetzwerks (10) zugeordnet ist, empfangen wird,
- Identifizieren und Überprüfen des Geräts (90) mittels eines Authentifizierungsmoduls (40) des Industrienetzwerks (10),
- bei einem positiven Ergebnis der Überprüfung, Senden einer Konfigurationsdatei an das Gerät (90), wobei in der Konfigurationsdatei Daten bezüglich der Zugangsberechtigung des Geräts (90) zu dem mandantenfähigen virtuellen Netz (20) enthalten sind,
- Konfigurieren des Geräts (90), insbesondere einer Kommunikationsschnittstelle des Geräts (90), gemäß der von dem Gerät (90) empfangenen Konfigurationsdatei,
- Überprüfen der Zugangsberechtigung des konfigurierten Geräts (90) in einem Zugangspunkt (60) des Industrienetzwerks (10) und
- bei einem positiven Ergebnis der Überprüfung, Gewähren eines Zugangs des Geräts (90) zu dem mandantenfähigen virtuellen Netz (20).

2. Verfahren nach Anspruch 1,
wobei das Verfahren des Weiteren die folgenden Schritte zur Bereitstellung des Onboarding-Netzes (30) aufweist:
- Erzeugen des Onboarding-Netzes (30) und des Authentifizierungsmoduls (40),
- Verbinden des Onboarding-Netzes (30) mit dem Authentifizierungsmodul (40),
- Erstrecken des Onboarding-Netzes (30) auf den Zugangspunkt (50) des Industrienetzwerks (10),
- Erzeugen des Zugangsnetzes (50) und
- Verbinden des Zugangsnetzes (50) mit dem Onboarding-Netz (30) .

3. Verfahren nach einem der vorhergehenden Ansprüche,
wobei das Zugangsnetz (50) nur zeitlich begrenzt zum Empfangen von Onboarding-Anfragen zur Verfügung gestellt wird.

4. Industrienetzwerk (10), umfassend
- ein mandantenfähiges virtuelles Netz (20),
- ein Onboarding-Netz (30),
- ein dem Onboarding-Netz (30) zugeordnetes Zugangsnetz (50), wobei das Zugangsnetz (50) dazu eingerichtet ist, eine On-boarding-Anfrage eines Geräts (90) betreffs eines Zugangs zu dem mandantenfähigen virtuellen Netz (20) zu empfangen,
- ein Authentifizierungsmodul (40), das dazu eingerichtet ist, das Gerät (90) zu identifizieren und zu überprüfen und
- einen Zugangspunkt (60), auf den sich das Onboarding-Netz (30) erstreckt und der dazu eingerichtet ist, eine Zugangsberechtigung des Geräts (90) zu überprüfen und, bei einem positiven Ergebnis der Überprüfung, dem Gerät (90) Zugang zu dem mandantenfähigen virtuellen Netz (20) zu gewähren.

5. Industrienetzwerk (10) nach Anspruch 4,
wobei das Industrienetzwerk (10) mindestens ein weiteres mandantenfähiges virtuelles Netz (21) aufweist.

6. Industrienetzwerk (10) nach Anspruch 5,
wobei das Onboarding-Netz (30) als gemeinsames Onboarding-Netz (30) für das Onboarding von Geräten (90) zu dem mandantenfähigen virtuellen Netz (20) und dem weiteren mandantenfähigen virtuellen Netz (21) fungiert.

7. Industrienetzwerk (10) nach Anspruch 5,
wobei das Industrienetzwerk (10) mindestens ein weiteres On-boarding-Netz (31) aufweist, wobei das Onboarding-Netz (30) für das Onboarding von Geräten (90) zu dem mandantenfähigen virtuellen Netz (20) fungiert und das weitere Onboarding-Netz (31) für das Onboarding von Geräten (90) zu dem weiteren mandantenfähigen virtuellen Netz (21) fungiert.

8. Industrienetzwerk (10) nach Anspruch 7,
wobei das Industrienetzwerk (10) mindestens ein weiteres Authentifizierungsmodul (41), das dazu eingerichtet ist, ein Gerät (90), das eine Onboarding-Anfrage betreffs eines Zugangs zu dem weiteren mandantenfähigen virtuellen Netz (21) gestellt hat, zu identifizieren und zu überprüfen.

9. Industrienetzwerk (10) nach Anspruch 8,
wobei eine Einheit im Industrienetzwerk (10) beide Onboarding-Netze (30, 31) und beide Authentifizierungsmodule (40, 41) beherbergt.

10. Industrienetzwerk (10) nach Anspruch 8,
wobei die Onboarding-Netze (30, 31) und/oder die Authentifizierungsmodule (40, 41) in mehreren Einheiten des Industrienetzwerks (10) beherbergt sind.

11. Industrienetzwerk (10) nach einem der Ansprüche 4 bis 10, wobei das Industrienetzwerk (10) mindestens einen weiteren Zugangspunkt (61) aufweist und sich das Onboarding-Netz (30) auf den Zugangspunkt (60) und den weiteren Zugangspunkt (61) erstreckt.

12. Industrienetzwerk (10) nach Anspruch 11,
wobei die beiden Zugangspunkte (60, 61) örtlich, insbesondere mehrere Meter, voneinander getrennt sind.

13. Industrienetzwerk (10) nach einem der Ansprüche 11 oder 12,
wobei die beiden Zugangspunkte (60, 61) für unterschiedliche Zugangstechnologien vorgesehen sind.

## Claims

1. Method for onboarding a device (90) in a client-capable virtual network (20) of an industrial network (10), comprising the following steps:
- receiving an onboarding request from the device (90) concerning access to the client-capable virtual network (20) of the industrial network (10), the onboarding request being received in an access network (50) of the industrial network (10) that is associated with an onboarding network (30) of the industrial network (10),
- identifying and checking the device (90) by means of an authentication module (40) of the industrial network (10),
- if the result of the check is positive, transmitting a configuration file to the device (90), the configuration file containing data regarding the permission for the device (90) to access the client-capable virtual network (20),
- configuring the device (90), in particular a communication interface of the device (90), according to the configuration file received by the device (90),
- checking the access permission of the configured device (90) at an access point (60) of the industrial network (10), and
- if the result of the check is positive, affording access by the device (90) to the client-capable virtual network (20).

2. Method according to Claim 1,
wherein the method additionally comprises the following steps for providing the onboarding network (30):
- producing the onboarding network (30) and the authentication module (40),
- connecting the onboarding network (30) to the authentication module (40),
- extending the onboarding network (30) to the access point (50) of the industrial network (10),
- producing the access network (50), and
- connecting the access network (50) to the onboarding network (30) .

3. Method according to either of the preceding claims, wherein the access network (50) is made available to receive onboarding requests only for a limited period.

4. Industrial network (10), comprising
- a client-capable virtual network (20),
- an onboarding network (30),
- an access network (50) associated with the onboarding network (30), the access network (50) being set up to receive an onboarding request from a device (90) concerning access to the client-capable virtual network (20),
- an authentication module (40) that is set up to identify and check the device (90), and
- an access point (60) to which the onboarding network (30) extends and that is set up to check an access permission of the device (90) and, if the result of the check is positive, to grant the device (90) access to the client-capable virtual network (20).

5. Industrial network (10) according to Claim 4,
wherein the industrial network (10) comprises at least one further client-capable virtual network (21).

6. Industrial network (10) according to Claim 5,
wherein the onboarding network (30) serves as a shared onboarding network (30) for onboarding devices (90) to the client-capable virtual network (20) and the further client-capable virtual network (21).

7. Industrial network (10) according to Claim 5,
wherein the industrial network (10) comprises at least one further onboarding network (31), the onboarding network (30) serving to onboard devices (90) to the client-capable virtual network (20) and the further onboarding network (31) serving to onboard devices (90) to the further client-capable virtual network (21).

8. Industrial network (10) according to Claim 7,
wherein the industrial network (10) comprises at least one further authentication module (41) that is set up to identify and check a device (90) that has made an onboarding request concerning access to the further client-capable virtual network (21).

9. Industrial network (10) according to Claim 8,
wherein a unit in the industrial network (10) accommodates both onboard networks (30, 31) and both authentication modules (40, 41).

10. Industrial network (10) according to Claim 8,
wherein the onboarding networks (30, 31) and/or the authentication modules (40, 41) are accommodated in multiple units of the industrial network (10).

11. Industrial network (10) according to one of Claims 4 to 10,
wherein the industrial network (10) comprises at least one further access point (61) and the onboarding network (30) extends to the access point (60) and the further access point (61) .

12. Industrial network (10) according to Claim 11,
wherein the two access points (60, 61) are spatially separated from one another, in particular by several metres.

13. Industrial network (10) according to either of Claims 11 and 12,
wherein the two access points (60, 61) are provided for different access technologies.

## Revendications

1. Procédé d'intégration d'un appareil (90) dans un réseau virtuel multitenant (20) d'un réseau industriel (10), comportant les étapes suivantes :
- réception d'une demande d'intégration de l'appareil (90) concernant un accès audit réseau virtuel multitenant (20) du réseau industriel (10), la demande d'intégration étant reçue dans un réseau d'accès (50) du réseau industriel (10) attribué à un réseau d'intégration (30) du réseau industriel (10),
- identification et vérification du dispositif (90) grâce à un module d'authentification (40) du réseau industriel (10),
- en cas de résultat affirmatif de la vérification, envoi d'un fichier de configuration à l'appareil (90), le fichier de configuration contenant des données relatives à l'autorisation d'accès de l'appareil (90) au réseau virtuel multitenant (20),
- configuration de l'appareil (90), notamment d'une interface de communication de l'appareil (90), selon le fichier de configuration reçu par l'appareil (90),
- vérification de l'autorisation d'accès de l'appareil configuré (90) dans un point d'accès (60) du réseau industriel (10) et,
- en cas de résultat affirmatif de la vérification, autorisation d'un accès de l'appareil (90) au réseau virtuel multitenant (20).

2. Procédé selon la revendication 1, dans lequel le procédé comporte par ailleurs les étapes suivantes pour la mise à disposition du réseau d'intégration (30) :
- génération du réseau d'intégration (30) et du module d'authentification (40),
- interconnexion du réseau d'intégration (30) et du module d'authentification (40),
- extension du réseau d'intégration (30) au point d'accès (50) du réseau industriel (10),
- génération du réseau d'accès (50) et
- interconnexion du réseau d'accès (50) avec le réseau d'intégration (30).

3. Procédé selon l'une des revendications précédentes, dans lequel la mise à disposition du réseau d'accès (50) est limité dans le temps concernant la réception de demandes d'intégration.

4. Réseau industriel (10), comportant
- un réseau virtuel multitenant (20),
- un réseau d'intégration (30),
- un réseau d'accès (50) attribué au réseau d'intégration (30), le réseau d'accès (50) étant conçu pour recevoir une demande d'intégration d'un appareil (90) concernant un accès au réseau virtuel multitenant (20),
- un module d'authentification (40) apte à identifier et vérifier l'appareil (90) et
- un point d'accès (60) sur lequel s'étend le réseau d'intégration (30) et apte à vérifier une autorisation d'accès de l'appareil (90) et pour accorder à l'appareil (90), en cas de résultat affirmatif de la vérification, l'accès au réseau virtuel multitenant (20).

5. Réseau industriel (10) selon la revendication 4, dans lequel le réseau industriel (10) comporte au moins un réseau virtuel multitenant (21) supplémentaire.

6. Réseau industriel (10) selon la revendication 5, dans lequel le réseau d'intégration (30) fait office de réseau d'intégration (30) commun pour l'intégration d'appareils (90) au réseau virtuel multitenant (20) et au réseau virtuel multitenant supplémentaire (21).

7. Réseau industriel (10) selon la revendication 5, dans lequel le réseau industriel (10) comporte au moins un réseau d'intégration supplémentaire (31), le réseau d'intégration (30) assurant l'intégration d'appareils (90) au réseau virtuel multitenant (20) et le réseau d'intégration supplémentaire (31) assurant l'intégration d'appareils (90) au réseau virtuel multitenant supplémentaire (21).

8. Réseau industriel (10) selon la revendication 7, dans lequel le réseau industriel (10) comporte au moins un module d'authentification supplémentaire (41) conçu pour identifier et vérifier un appareil (90) ayant soumis une demande d'intégration concernant un accès au réseau virtuel multitenant supplémentaire (21).

9. Réseau industriel (10) selon la revendication 8, dans lequel les deux réseaux d'intégration (30, 31) et les deux modules d'authentification (40, 41) sont intégrés dans un ensemble du réseau industriel (10).

10. Réseau industriel (10) selon la revendication 8, dans lequel les réseaux d'intégration (30, 31) et / ou les modules d'authentification (40, 41) sont intégrés dans plusieurs ensembles du réseau industriel (10).

11. Réseau industriel (10) selon l'une des revendications 4 à 10, dans lequel le réseau industriel (10) comporte au moins un point d'accès supplémentaire (61) et le réseau d'intégration (30) s'étend sur le point d'accès (60) et sur le point d'accès supplémentaire (61).

12. Réseau industriel (10) selon la revendication 11, dans lequel les deux points d'accès (60, 61) sont physiquement séparés l'un de l'autre, notamment par une distance de plusieurs mètres.

13. Réseau industriel (10) selon l'une des revendications 11 ou 12, dans lequel les deux points d'accès (60, 61) sont prévus pour différentes technologies d'accès.
